Europäisches Patentamt

European Patent Office

Office européen des brevets

(11) Numéro de publication: **0 154 596**
A2

(12) # DEMANDE DE BREVET EUROPEEN

(21) Numéro de dépôt: **85460004.6**

(22) Date de dépôt: **04.03.85**

(51) Int. Cl.⁴: **B 62 J 7/08**
**B 62 J 9/00**

(30) Priorité: **09.03.84 FR 8404032**

(43) Date de publication de la demande:
**11.09.85 Bulletin 85/37**

(84) Etats contractants désignés:
**AT BE CH DE FR GB IT LI LU NL**

(71) Demandeur: **Frandon, Jean-Paul**
**1 Allée des Glayeuls**
**F-56000 Vannes(FR)**

(72) Inventeur: **Frandon, Jean-Paul**
**1 Allée des Glayeuls**
**F-56000 Vannes(FR)**

(74) Mandataire: **Dubreuil, Annie**
**Cabinet DUBREUIL 7, rue de Keroman**
**F-56100 Lorient(FR)**

(54) **Bagage et porte-bagage qui lui est adapté, destiné à l'équipement d'un véhicule à deux roues.**

(57) L'invention concerne un bagage et un porte-bagage qui lui est adapté, destinés à l'équipement d'un véhicule à deux roues.

Un tel bagage (50) est essentiellement constitué de trois compartiments (A,B,C,) solidaires les uns des autres, intégrés en un seul élément et délimitant trois volumes libres intérieurs qui communiquent entre eux. Un tel bagage (50) est fixé sur un porte-bagage (1) comportant des moyens de fixation (5,6,7,12,20,21) qui permettent de solidariser chacun des compartiments avec accès à ces moyens uniquement par l'intérieur de ces compartiments.

L'invention trouve son application notamment dans l'équipement des motos.

Fig. 1

EP 0 154 596 A2

# BAGAGE ET PORTE-BAGAGE QUI LUI EST ADAPTE

# DESTINE A L'EQUIPEMENT D'UN VEHICULE A DEUX ROUES

L'invention concerne un bagage et un porte-bagage qui lui est adapté, destiné à l'équipement d'un véhicule à deux roues.

Dans l'état actuel de la technique, différents accessoires sont présentés dans le commerce pour permettre au motocycliste de transporter ses effets et autres objets. Les principaux problèmes rencontrés à ce niveau sont la facilité pour l'usager d'accéder à ses affaires, de les sentir en sécurité, à l'abri du vol lorsqu'il les abandonne momentanément avec sa moto en stationnement.

La présente invention a pour but de résoudre tous ces problèmes et concerne un nouveau type de bagage spacieux et qui répond à toutes ces exigences. Elle concerne plus précisément un bagage et un porte-bagage qui lui est adapté, destinés à l'équipement d'un véhicule à deux roues, caractérisé en ce que ce bagage et ce porte-bagage sont rendus solidaires l'un de l'autre grâce à un système de moyens de fixations accessibles uniquement par l'intérieur dudit bagage.

L'invention sera mieux comprise à l'aide des explications qui vont suivre et des figures parmi lesquelles :

- la figure 1 illustre schématiquement un bagage pour moto présentant trois volumes disponibles, ainsi que le porte-bagage adapté pour le recevoir ;

- la figure 2 est une illustration schématique de ce porte-bagage lui-même ;

- les figures 3, 4, et 5 illustrent schématiquement deux types de bagages dérivés du bagage à trois volumes, représenté sur la figure 1, capable de coopérer comme ce dernier avec le porte-bagage selon l'invention.

Pour plus de clarté, les mêmes éléments portent les mêmes références dans toutes les figures.

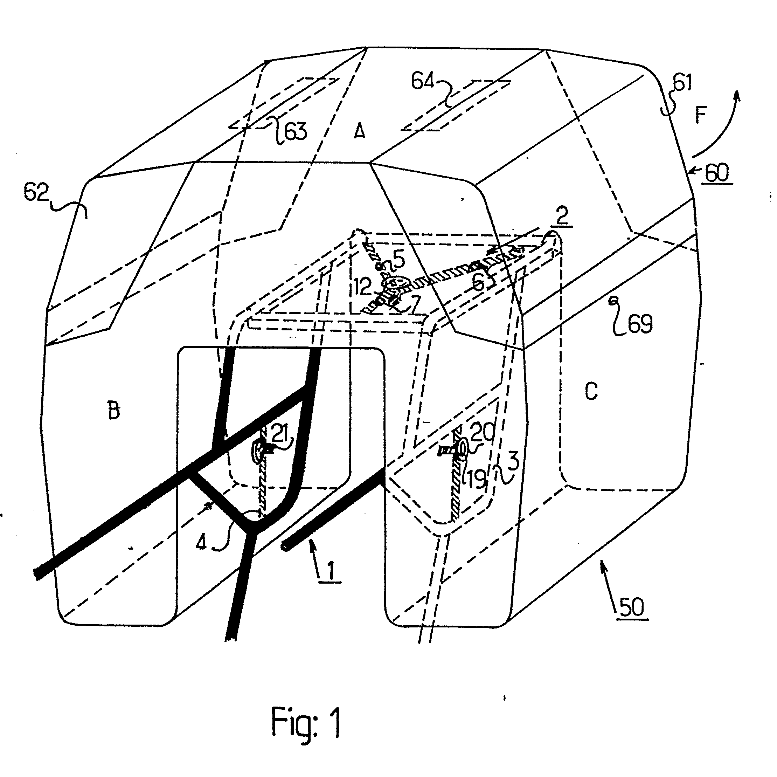

La figure 1 illustre à la fois un bagage conforme à l'invention et le porte-bagage plus particulièrement adapté pour sa mise en place sur un véhicule à deux roues tel qu'une moto, avec des moyens de solidarisation très faciles à mettre en œuvre. Selon une caractéristique

importante de l'invention, un tel porte-bagage 1 comporte un plateau 2 et deux faces latérales 3 et 4 dont la caractéristique essentielle est de comporter des moyens de fixation du ou des bagages capables d'assurer en même temps que sa fonction de solidarisation à la moto, une fonction de complément de sécurité contre le vol. Toute désolidarisation du bagage est en effet impossible si l'on n'a pas accès à l'intérieur de ce dernier, comme cela sera expliqué ultérieurement. Comme le montre la figure 1, le plateau 2 est équipé de trois de ces moyens de fixation 5, 6 et 7 montés sur un cadre évidé comportant par exemple, trois branches reliant un point central 12 au cadre extérieur de ce plateau 2. Ce point central 12 peut également servir de quatrième moyen de fixation. Ces moyens de fixation sont par exemple constitués d'un taraudage dans lequel on visse par l'intérieur du bagage, mis en position, une vis moletée 19 à laquelle donc, inversement, on ne peut accéder, pour libérer le bagage, que de l'intérieur de celui-ci. Il faut donc y avoir accès. Ou bien les ouvertures de ce bagage sont également verrouillées et l'auteur d'un vol éventuel se heurte ainsi à deux obstacles, ou bien ces ouvertures ne sont pas verrouillées et le voleur doit procéder à une opération qui n'est ni évidente ni instantanée, ce qui risque fort d'attirer les regards de l'environnement et donc de le dissuader fortement.

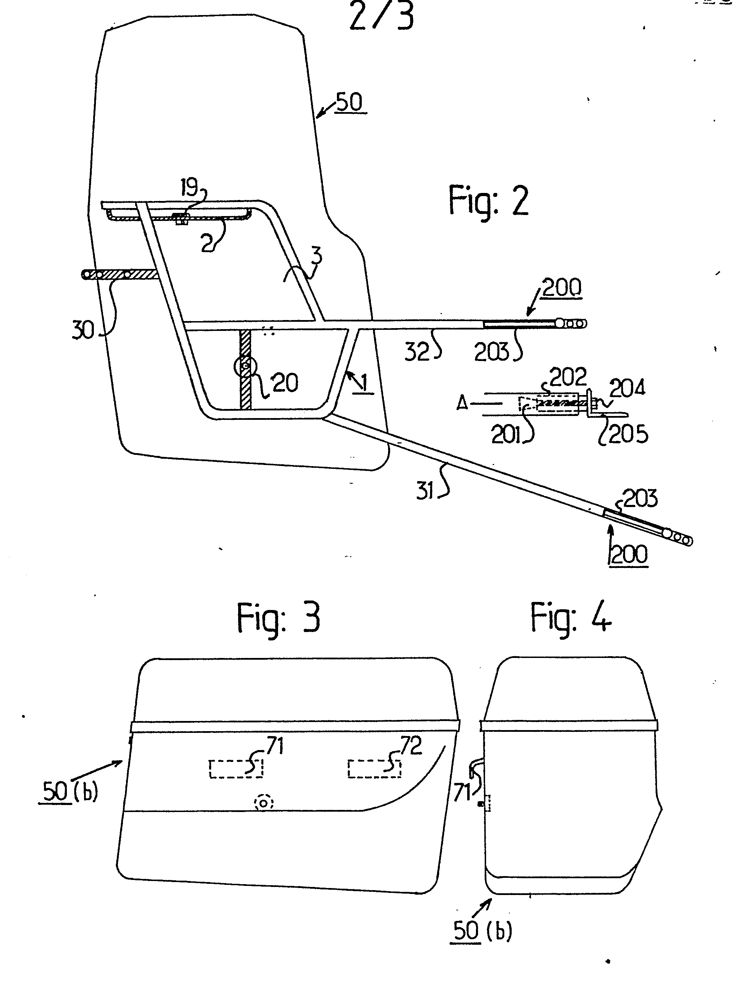

De même, chaque face latérale comporte un moyen de fixation 20 et 21 qui, comme les précédents, joue la double fonction déjà décrite, mais cette fois, pour les bagages ou les parties de bagages dits latéraux. Comme le montre la figure 2, sur laquelle on retrouve tous les éléments déjà décrits précédemment, un porte-bagage conforme à l'invention comporte également un patte de fixation 30, éventuellement amovible, supportant les feux clignotants. L'utilité de cette patte 30 sera mieux comprise lors de la description de l'une des variantes de bagage conforme à l'invention, adaptée précisément à ce type particulier de porte-bagage. Ce dernier s'adapte sur toutes les motos de manière classique car il est équipé de bras de liaison 31 et 32 se terminant par un système de pattes 200 à serrage par cône 201 (dont le détail A est représenté sur la figure 2) à l'intérieur d'un tube dit tube expandeur 202 lui-même introduit à l'intérieur de l'extrémité 203 du bras de liaison 31 ou 32, ou par tout autre moyen équivalent. Ce moyen, dans le cas du bras de liaison 32, est ancré sur le haut de l'amortisseur ou sur tout point d'ancrage situé au même niveau. Dans le cas du bras de liaison 31, ce moyen est ancré sur le repose pieds du passager. Un tel système permet de rallonger ou de raccourcir selon le cas. Le mouvement du cône 201 est assuré par l'écrou extérieur 204 qui solidarise la patte de fixation 205.

Selon une variante préférée de l'invention et comme le montre la figure 1, un bagage 50 conforme à l'invention se présente selon une caractéristique importante, sous la forme de trois compartiments A, B, C solidaires les un des autres, intégrés en un seul élément, et délimitant trois volumes libres intérieurs qui communiquent entre eux. L'un est situé au-dessus ; il est appelé compartiment horizontal A et les deux autres B et C disposés verticalement de part et d'autre de la roue arrière de la moto sont appelés compartiments latéraux. Chacun de ces volumes peut à la demande être utilisé tel quel ou recevoir un sac dont la forme et les dimensions épousent le volume intérieur du compartiment auquel il est destiné. Ces sacs ne sont pas représentés car ils sont réalisés de manière classique, avec éventuellement fermeture éclair et poignées, par exemple. Leur caractéristique essentielle est celle d'être adaptés pour occuper et remplir les volumes libres A, B, ou C du bagage trivolume conforme à l'invention. L'utilisateur n'a donc qu'à se saisir des sacs, sans avoir à toucher à son bagage lui-même qui reste attaché à la moto en toute sécurité. Comme le montre toujours la figure 1, ce bagage 50 à trois volumes est fixé sur le porte-bagage 1 conforme à l'invention en trois points : d'une part, grâce au moyen de fixation tel que le taraudage central 12 au niveau du compartiment horizontal A, d'autre part grâce aux deux moyens de fixation latéraux tels que les taraudages 20 et 21. Comme cela a déjà été dit précédemment, une vis 19 est vissée dans chacun de ces taraudages, vis accessible seulement de l'intérieur des compartiments, ce qui leur permet de jouer une fonction d'anti-vol qui s'ajoute à leur fonction de solidarisation du bagage 50a sur son porte-bagage 1.

Selon une autre caractéristique essentielle de l'invention, le capot 60 qui recouvre le tout est constitué dans l'exemple décrit au moyen de la figure 1, de deux volets ouvrants 61 et 62 articulés autour de deux charnières 63 et 64. Celles-ci sont parallèles l'une à l'autre situées sur le compartiment horizontal A et positionnées parallèlement à l'axe longitudinal du bagage qui n'est autre que l'axe longitudinal de la moto. Un tel agencement permet donc à l'utilisateur de soulever chacun de ces volets 61 et 62 comme le symbolise la flèche F qui trouve ainsi un accès facile aux trois compartiments A, B et C. Leur serrure de sécurité 69 est prévue, qui bloque l'ouverture de chacun des volets 61 et 62. Un avantage non négligeable de cette disposition "en aile" de ces volets est qu'en position soulevée, ces volets protègent néanmoins contre les intempéries (pluie ou neige) l'intérieur des compartiments qu'ils continuent, en quelque sorte, à coiffer en hauteur. Dans une autre variante, une seule charnière (non représentée) peut être prévue à l'une des extrémités du capot 60. Dans ce cas, la rotation de l'ensemble de ce capot s'effectue autour de cette charnière unique et une seule serrure de sécurité est alors nécessaire.

Les dimensions respectives de chacun de ces compartiments sont optimisées en fonction des besoins de l'usager et également de la cylindrée de la moto qui porte le bagage. L'ensemble doit être harmonieux et aussi aérodynamique que possible. Une base de dimensionnement, notamment du compartiment horizontal, peut être régie en fonction de l'encombrement de deux casques, ce qui permet aux utilisateurs de mettre ces derniers en sécurité lorsqu'ils laissent leur moto en stationnement.

La variante du bagage en trois volumes A, B et C complètement intégrés est certes la variante préférée de l'invention. Néanmoins, l'usager peut désirer profiter des avantages prodigués par le porte-bagage 1, conforme à l'invention, sans pour cela avoir forcément besoin à tous moments de ce bagage tri-volume. Il peut alors substituer à ce dernier, des bagages simplifiés 50b et/ou 50c comme le montrent les figures 3, 4 et 5. La figure 3 représente une valise 50b vue dans le sens longitudinal et, la figure 4, cette même valise 50b vue dans le sens transversal. Une telle valise est destinée à être accrochée sur l'une des faces latérales 3 ou 4 d'un porte-bagage 1, conforme à l'invention. Pour cela, deux crochets 71 et 72 permettent de supporter cette valise 50b sur le porte-bagage 1, tandis que la solidarisation de cette valise s'effectue comme dans le cas du bagage tri-volume 50, au moyen d'une vis 19 vissée dans un des taraudages 20 ou 21 dudit porte-bagage 1. Comme précédemment, il faut donc avoir accès à l'intérieur de la valise susceptible d'être fermée au moyen d'une serrure de sécurité '69, pour pouvoir la désolidariser du porte-bagage.

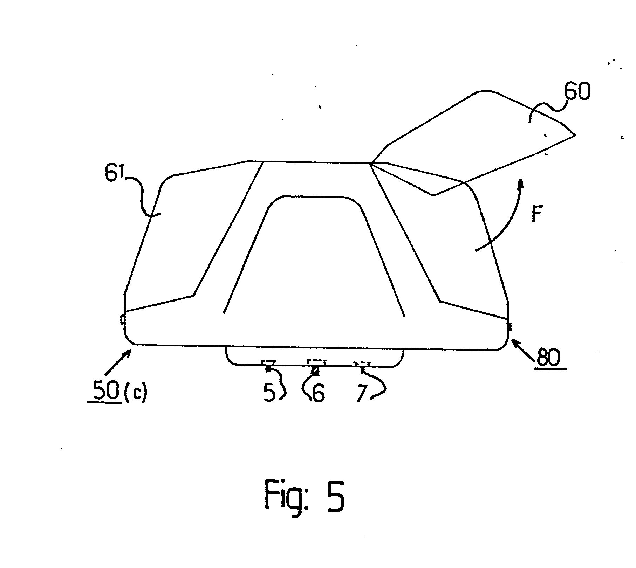

La figure 5 représente une valise supérieure plus connue sous l'appellation anglosaxonne de "Top-Case" 50c qui présente la caractéristique, comme pour le compartiment horizontal A de la variante précédemment décrite du bagage tri-volume 50 de la figure 1, de comporter deux volets ouvrants 60 et 61 autour de deux charnières parallèles l'une par rapport à l'autre et toutes deux parallèles à l'axe de la moto. Une telle valise supérieure 50 c comporte une embase 85 qui est rendue solidaire du plateau 2 du porte-bagage 1 selon l'invention grâce aux trois taraudages en étoile 5, 6, 7 et de trois vis molletées 19. Comme précédemment, ces vis, ici aussi, ne sont accessibles que par l'intérieur de la valise qui possède d'autre part deux serrures de sécurité 69. La patte de fixation 30 permet de positionner les feux clignotants de manière visible en dehors de l'encombrement du bagage.

Les bagages simples ou à triple volume conformes à l'invention, ainsi que les porte-bagages qui leur sont adaptés sont d'une mise en œuvre simple et efficace pour tous les types de moto et présentent pour les usagers un grand nombre d'avantages qui ont déjà été énoncés précédemment. Il s'agit notamment d'une accessibilité totale et facile, d'une densité de rangement optimale, d'une facilité d'accès même s'il pleut et d'une sécurité totale grâce au double écrou opposé à toute tentative de vol : d'une part, les serrures de sécurité l'assurent totalement bien qu'étant en nombre réduit et d'autre part, les moyens de solidarisation du ou des bagages sur le porte-bagage auxquels on ne peut avoir accès que si l'on a initialement accès à l'intérieur des compartiments y contribuent également.

## REVENDICATIONS

1) Bagage coopérant avec un porte-bagage qui lui est adapté, destiné à l'équipement d'un véhicule à deux roues, caractérisé en ce que ce bagage (50) et ce porte-bagage (1) sont rendus solidaires l'un de l'autre grâce à un système de moyens de fixation (5, 6, 7, 12, 20, 21) accessible uniquement par l'intérieur dudit bagage (50).

2) Bagage selon la revendication 1, caractérisé en ce que ce porte-bagage (1) comporte d'une part, un plateau (2) constitué d'un cadre évidé comportant trois branches reliant un point commun central au cadre extérieur, chacune de ces branches et le point central comportant chacun un des moyens de fixation (5, 6, 7, 12); et, d'autre part, deux faces latérales (3 et 4) comportant chacune un de ces moyens de fixation (20 et 21).

3) Bagage selon l'une des revendications 1 et 2, caractérisé en ce qu'il est constitué de trois compartiments (A, B, C) solidaires les uns des autres, intégrés en un seul élément et délimitant trois volumes libres intérieurs qui communiquent entre eux.

4) Bagage selon la revendication 3, caractérisé en ce que l'agencement de ces trois compartiments est tel que le compartiment (A) est positionné et rendu solidaire du plateau (2) du porte-bagage (1) grâce au moyen de fixation central (12), chacun des deux autres compartiments (B) et (C) étant positionné latéralement et rendu solidaire de chacune des faces latérales (2) et (3) du porte-bagage (1) grâce respectivement aux moyens de fixation (20) et (21).

5) Bagage selon la revendication 4, caractérisé en ce que le compartiment (A) solidaire du plateau (2), comporte un capot (60) constitué de deux volets ouvrants (61) et (62) articulés autour de deux charnières (63) et (64) disposées parallèlement l'une par rapport à l'autre et toutes deux parallèlement à l'axe longitudinal de la moto.

6) Bagage selon la revendication 5, caractérisé en ce que chaque volet ouvrant (61) et (62) est équipé d'une serrure de sécurité (69).

7) Bagage selon la revendication 4, caractérisé en ce que ce capot ne comporte qu'un volet ouvrant articulé par une charnière située parallèlement à l'axe longitudinal de la moto, ce volet ouvrant étant équipé d'une serrure de sécurité.

8) Bagage selon l'une des revendications 1 et 2, caractérisé en ce qu'il est constitué d'au moins une valise (50b) destinée à être positionnée contre l'une des faces latérales (20,21) du porte-bagage (1) et à être rendue solidaire de celle-ci grâce à l'un des moyens de fixation (20,21) concerné.

9) Bagage selon l'une des revendications 1 et 2, caractérisé en ce qu'il est constitué d'une valise (50c) destinée à être posée sur le plateau (2) du porte-bagage (1) et à être rendue solidaire de celui-ci grâce aux trois moyens de fixation (5, 6, 7).

10) Bagage selon la revendication 9, caractérisé en ce que cette valise (50c) comporte un capot (60) constitué de deux volets ouvrants (61) et (62) articulés autour de deux charnières (63) et (64) disposées parallèlement l'une par rapport à l'autre et toutes les deux étant parallèles à l'axe longitudinal de la moto.

Fig: 1

2/3

0154596

Fig: 2

Fig: 3

Fig: 4

0154596

Fig: 5